# EUROPÄISCHE PATENTSCHRIFT

(11) **EP 2 062 339 B1**
(45) Veröffentlichungstag und Bekanntmachung des Hinweises auf die Patenterteilung: **30.09.2015**
(21) Anmeldenummer: 07802000.5
(22) Anmeldetag: 30.08.2007
(51) Int. Cl.: H02B 1/30

(54) **STEUER- UND SCHALTSCHRANK**
CONTROL AND SWITCHGEAR
ARMOIRE DE COMMANDE ET DE DISTRIBUTION

(30) Priorität: 02.09.2006 DE 102006041234
(43) Veröffentlichungstag der Anmeldung: 27.05.2009
(73) Patentinhaber: ABB Technology AG, 8050 Zürich (CH)
(72) Erfinder: HENKE, Ralf, 50321 Brühl (DE); WEHRMANN, Sven, 40724 Hilden (DE)
(74) Vertreter: Schmidt, Karl Michael
(86) Internationale Anmeldenummer: PCT/EP2007/007579
(87) Internationale Veröffentlichungsnummer: WO 2008/028592

(56) Entgegenhaltungen:
- KR-A- 20040 100 689

## Beschreibung

Die Erfindung betrifft einen Steuer- und Schaltschrank für eine Mittel- oder Hochspannungsschaltanlage, gemäß Oberbegriff des Patentanspruches 1.

Innerhalb eines solchen Steuer- und Schaltschrankes sind kleine Schaltgeräte, Schaltschütze, Thyristoren etc, die wiederum die Schaltgeräte und -antriebe von Mittel- und Hochspannungsschaltanlagen ansteuern. Einen solchen Steuer- und Schaltschrank nennt man in der Mittelspannungsschaltanlagentechnik auch Schaltfeld. D.h. jedem Schaltfeld wird wenn möglich ein solcher Steuer- und Schaltschrank zugewiesen. An den Bedienelementen eines solchen Schaltschrankes sind neben Tast- oder Verriegelungsschaltern auch Rückmeldeanzeigen, d.h. ggfs auch Alarmzustandsmelder platziert.

Bisher müssen bei Ausführung einer konventionellen Steuerung alle benötigten Komponenten einzeln in die Schaltfeldtür eingebaut und verdrahtet werden. Bei einer sogenannten Doppel-Sammelschienenanlage sind dies bis zu 18 Schaltgeräte. Die Ausführung erfolgte gemäß VDE 0670 Teill 600-1000 sowie diversen anderen Normen wie z. B. VDE 0100. Die daraus resultierenden Nachteile dieser bisherigen Verfahrensweise sind hoher Konstruktions-, Montage-, Verdrahtungs- und Dokumentationsaufwand. Weiterhin ist die Gefahr von möglichen Fehlern bei der Verdrahtung gegeben, da diese nicht uniform gefertigt wird.

Aus der KR 2004 0100689 A ist ein Steuer- und Schaltschrank bekannt, mit einem Steuergerät, welches welches in einen Ausschnitt der Schaltfeldtür eingebaut ist, und nach aussen das Bedienpanel und nach innen eine Serie von Schnittstellen aufweist. Auch hierbei werden für verschiedene, mit dem Schaltschrank angestrebte Funktionen unterschiedliche Steuergeräte benötigt. D.h. jede Anwendung hat ihr eigenes Steuergerät.

Die Ansteuerung und Parametrierung der Alarmmeldungen ist bei dieser bekannten Verfahrensweise unflexibel. Änderungen können nur durch Austausch bestehender Hardware realisiert werden. Eine Überwachungs-, sowie Watchdogfunktion existiert bei der bekannten Bauform nicht. Die sich daraus ergebende Variantenvielfalt aufgrund individueller Lösungen ist nahezu unendlich.

Der Erfindung liegt daher die Aufgabe zugrunde, einen Steuer- und Schaltschrank der gattungsgemäßen Art dahingehend zu verbessern, dass die genannten Nachteile vermieden, und ansonsten mit einem minimalen Aufwand und einer gegebenen Anzahl vorfertigbarer Verdrahtungselemente, eine maximale Vielfalt von individuellen Funktionslösungen erzielt werden kann.

Die gestellte Aufgabe ist bei einem Steuer- und Schaltschrank der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen angegeben.

Mit der Erfindung können im Ergebnis gemäß dem eingangs genannten Beispiel alle 18 Schaltgeräte in einem Gehäuse verwirklicht werden, und dies bei minimalem Montageaufwand bei einer Serienfertigung.

Der Kern der Erfindung besteht dabei darin, dass die funktionsbezogene Verdrahtung baulich in einem uniformen Steuergerät zusammengefasst wird, welches in einen Ausschnitt der Schaltfeldtür eingebaut ist, und nach aussen das Bedienpanel und nach innen eine Serie von Schnittstellen aufweist.

Dieses Steuergerät macht die übliche Verdrahtung in der Schaltfeldtür obsolet. Die Schnittstellen werden mit elektrischen Steckverbindungen zu den einzelnen Schaltgeräten im Schaltfeld direkt verbunden.

Das Steuergerät lässt sich daher uniform fertigen, was bei einer Serienproduktion ein enormer Vorteil ist. Der Vorteil liegt dabei nicht nur in der Fertigungsoptimierung allein, sondern auch in der damit erzielbaren hohen konstanten und daher reproduzierbaren Qualität.

In vorteilhafter Ausgestaltung ist jede Schnittstelle des Steuergerätes mit einer eigenen Elektronikplatine verbunden, wobei die länglichen Schnittstellenstecker bzw Schnittstellensteckkupplungen senkrecht zur Schaltfeldtür in das Schaltschrankinnere verlaufen, und die jeweiligen, den Schnittstellen zugeordneten Elektronikkarten vertikal in das Schaltgerät eingeschoben sind.

Dies führt zu einer sehr kompakten Bauweise einer maximalen Anzahl von funktionsbezogenen Schnittstellen, wobei die vertikale Anreihung der Elektronikkarten eine optimalen Kühlumströmung derselben erzielt.

D.h. bei der Montage kann der Steuer- und Schaltschrank zunächst uniform hergestellt werden. Sodann reduziert sich aber die ansonsten aufwändige Innenverkabelung deutlich. Die Funktionsapplikation kann der Monteur dann lediglich mit dem noch nicht eingebauten erfindungsgemäßen Steuergerät an einem Montagetisch vornehmen. Hernach wird das erfindungsgemäße Steuergerät nur noch in den Schaltschrank eingesetzt und die Flachkabel an die Steckleisten der Schnittstellen angeschlossen. Die letzten noch notwendigen Kabel können als vorgefertigte Kabelbäume verwendet werden. Die jeweilige Kundenspezifische Funktion wird durch die Umlegung von Dip-Schalter auf den Elektronikkarten vorgenommen.

In weiterer vorteilhafter Ausgestaltung ist angegeben, dass parallel zum Frontpanel eine Basisplatine eingebaut ist, die die Kontaktaufnahmen der Schalter einerseits und der internen Verdrahtung zu den schnittstellenbezogenen Elektronikkarten andererseits aufnimmt.

In weiterer vorteilhafter Ausgestaltung ist angegeben, dass in der Basisplatine mehrere Öffnungen in einem regelmäßigen und festgelegten Rastermaß angeordnet sind.

In weiterer vorteilhafter Ausgestaltung ist das Frontpanel an der Aussen- d.h. Bedienseite als funktionsprogrammierbares Touchscreenpanel ausgestaltet ist. In dieser Ausgestaltungsform werden zumindest Teilweise die üblichen Tastschalter durch programmierbare und auf den den Touchscreen frei platzierbare Tastflächen ersetzt. Dies hat den Vorteil, dass zunächst bei uniformer Ausgestaltung des Schalt-und Steuerschrankes im Nachhinein durch Programmierung die letztlichen Schaltfunktionen und Ausgestaltungen des Schaltfeldes in Bezug auf die Schaltelemente frei programmierbar und an die jeweiligen Kundenapplikation anpassbar ist.

Es ist somit nur noch 1 Türausschnitt notwendig. Zur Realisierung aller Einzellösungen werden aufgrund der intelligenten Modularität nur noch 6 Varianten benötigt. Die Verdrahtung erfolgt wie bereits erwähnt über einen standardisierten Kabelbaum. Alle Anschlüsse werden über Steckverbindungen realisiert. Der Platzbedarf in der Tür reduziert sich auf ca. ein drittel gegenüber der heutigen Lösung. Die Alarmmeldungen sind individuell auf den jeweiligen Anwendungsfall frei konfigurierbar. Bei Ausfall des Gerätes wird eine Systemmeldung generiert und für eine externe Visualisierung bereitgestellt. Parametrierte Test -Algorithmen erlauben jederzeit einen Check der Anzeigeelemente.

Die Erfindung ist in der Zeichnung dargestellt und nachfolgend näher beschrieben.

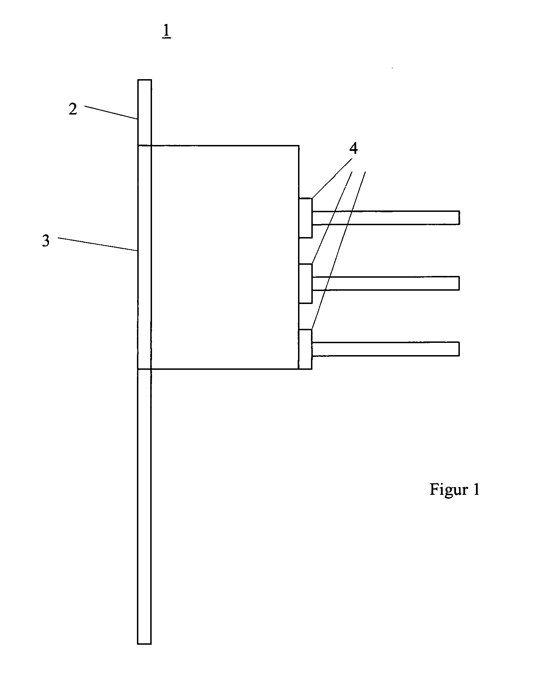

Figur 1 zeigt nur schematisch die zusammengefasste Steuerung für den Schaltschrank.

Bei bekannten Enrichtungen werden allen herangeführten Kabel und Kabelbäume hinter der Schaltschrank- oder Schaltfeldtür in Kabelstränge verteilt, weil die einzelnen Schaltgeräte, Schaltschütze auf der Fläche der Tür verteilt angeordnet sind.

Bei dem erfindungsgemäßen Schaltgerät werden diese einzelnen Schaltelemente alle in ein Schaltgerät zusammengefasst. Dieses weist dann aussen die Schnittstellen 4 zum Anschließen der Kabelstränge auf. Alle einzelnen Steuergeräte, Schaltschütze Relais etc befinden sich innerhalb dieses Steuergrätes. Die Verkabelungen auf der Innenseite der Schaltschrank- oder Schaltfeldtür entfallen ganz.

Das Steuergerät 1 ist in eine hier nicht weiter dargestellte Schaltfeldtür eingebaut. Diese enthält einen Ausschnitt durch den das Bedienpanel sichtbar und bedienbar angeordnet ist.

## Patentansprüche

1. Steuer- und Schaltschrank für eine Mittel- oder Hochspannungsschaltanlage, mit einem Steuergerät, welches in einen Ausschnitt der Schaltfeldtür (2) eingebaut ist, und nach aussen das Bedienpanel (3) und nach innen eine Serie von Schnittstellen (4) aufweist,
**dadurch gekennzeichnet,**
**dass** zur Erzielung einer maximalen Vielfalt von individuellen Funktionslösungen das Steuergerät uniform ist, und dass die funktionsbezogene Verdrahtung baulich in dem uniformen Steuergerät (1) zusammengefasst wird, indem jede Schnittstelle (4) des Steuergerätes (1) mit einer eigenen Elektronikplatine verbunden ist, wobei die länglichen Schnittstellenstecker bzw Schnittstellensteckkupplungen senkrecht zur Schaltfeldtür in das Schaltschrankinnere verlaufen, und die jeweiligen, den Schnittstellen zugeordneten Elektronikkarten vertikal eingeschoben sind.

2. Steuer- und Schaltschrank nach Anspruch 1,
**dadurch gekennzeichnet,**
**dass** parallel zum Bedienpanel eine Basisplatine eingebaut ist, die die Kontaktaufnahmen der Schalter einerseits und der internen Verdrahtung zu den schnittstellenbezogenen Elektronikkarten andererseits aufnimmt.

3. Steuer- und Schaltschrank nach Anspruch 2,
**dadurch gekennzeichnet,**
**dass** in der Basisplatine mehrere Öffnungen in einem regelmäßigen und festgelegten Rastermaß angeordnet sind.

4. Steuer- und Schaltschrank nach Anspruch 1,
**dadurch gekennzeichnet,**
**dass** das Bedienpaneel an der Aussen- d.h. Bedienseite als funktionsprogrammierbares Touchscreenpanel ausgestaltet ist.

## Claims

1. Control and switchgear cabinet for a medium-voltage or high-voltage switchgear assembly,
with a controller which is installed in a cutout in the switchpanel door (2) and the control panel (3) has a series of interfaces (4) on the outside and on the inside,
**characterized in that,**
in order to achieve a maximum variety of individual functional solutions, the controller is uniform, and **in that** the functionally-related wiring is physically combined in the uniform controller (1) by virtue of the fact that each interface (4) of the controller (1) is connected to its own electronics board, with the elongated interface plugs and/or interface plug couplings running at right angles to the switchpanel door into the switchgear cabinet interior, and with the respective electronics cards associated with the interfaces being inserted vertically.

2. Control and switchgear cabinet according to Claim 1,
**characterized in that**
a baseboard is installed parallel to the control panel and holds the contact holders of the switches on the one side and of the internal wiring to the interface-related electronics cards on the other side.

3. Control and switchgear cabinet according to Claim 2,
**characterized in that**
a plurality of openings are arranged on a regular and fixed grid size in the baseboard.

4. Control and switchgear cabinet according to Claim 1,
**characterized in that**
the control panel is in the form of a functionally programmable touchscreen panel on the outside, that is to say control side.

## Revendications

1. Armoire de commande et de distribution pour une installation de commutation moyenne ou haute tension, comprenant un appareil de commande qui est installé dans une découpe de la porte du boîtier de connexion (2), et qui présente vers l'extérieur le panneau de commande (3) et vers l'intérieur une série d'interfaces (4),
**caractérisée en ce que**
pour l'obtention d'une pluralité maximale de solutions fonctionnelles individuelles, l'appareil de commande est uniforme, et **en ce que** le câblage fonctionnel est rassemblé structurellement dans l'appareil de commande uniforme (1), par le fait que chaque interface (4) de l'appareil de commande (1) est connectée à une platine électronique propre, les connecteurs d'interface allongés ou les couplages de connexion d'interface allongés s'étendant perpendiculairement à la porte du boîtier de connexion dans l'intérieur de l'armoire de distribution, et les cartes électroniques respectives associées aux interfaces étant enfoncées verticalement.

2. Armoire de commande et de distribution selon la revendication 1,
**caractérisée en ce que**
parallèlement au panneau de commande est installée une platine de base qui reçoit d'une part les logements de contact des commutateurs et d'autre part du câblage interne aux cartes électroniques associées aux interfaces.

3. Armoire de commande et de distribution selon la revendication 2,
**caractérisée en ce que**
plusieurs ouvertures sont disposées dans la platine de base suivant une dimension modulaire régulière et fixe.

4. Armoire de commande et de distribution selon la revendication 1,
**caractérisée en ce que**
le panneau de commande est configuré au niveau du côté extérieur, c'est-à-dire le côté de commande, sous forme de panneau d'écran tactile à fonctions programmables.
